# DEMANDE DE BREVET EUROPEEN

(11) **EP 0 579 556 A1**
(43) Date de publication de la demande: **19.01.1994**
(21) Numéro de dépôt: 93401841.7
(22) Date de dépôt: 16.07.1993
(51) Int. Cl.: A01M 17/00

(54) **Appareil répartiteur de gaz toxique permettant la destruction en terre d'animaux nuisibles divers**

(30) Priorité: 16.07.1992 FR 9208785
(71) Demandeur: SERBIC Sarl, F-94100 Saint-Maur (FR)
(72) Inventeur: Demaille, Roger, F-93250 Villemomble (FR); Hossard, Armand, F-77400 Lagny (FR)
(74) Mandataire: Madeuf, René Louis

(57) **Abrégé**

Appareil répartiteur de gaz toxique permettant la destruction en terre d'animaux nuisibles divers tels que surmulots, rats, taupes, qui est constitué par un coffre étanche (1) comportant intérieurement au moins une chambre (C1) de retenue du gaz et qui peut être mise en communication au moyen d'un raccord à embout (8), d'une part, avec l'organe producteur de gaz toxique lourd et, d'autre part, avec des conduits de répartition de ce gaz lourd, caractérisé en ce que chaque conduit aboutit à un injecteur répartiteur (12) sensiblement tronconique que l'on place dans les galeries créées par les nuisibles à détruire, le coffret (1) formant réceptacle comportant, d'une part, des ouvertures d'entrée (13, 14) permettant l'injection de liquides toxiques complémentaires facilement volatils d'origines diverses et, d'autre part, sa chambre du réceptacle est divisée par une paroi semi-rigide formant cloison assurant la division en deux chambres (C1, C2) distinctes permettant ainsi une stabilité optimale du fluide transporté.

## Description

Les espaces verts connaissent un succès sans cesse grandissant du fait qu'un plus grand nombre de personnes se passionne pour l'utilisation et l'entretien de surfaces plantées soit de gazon, soit de légumes, soit d'espaces floraux.

La difficulté principale réside dans le fait que ces personnes interviennent sur des sites qui ont une végétation et une faune nuisibles propres qu'il faudrait traiter.

Si pour les végétaux il semble que le problème soit en passe d'être réglé, il n'en est pas de même pour la faune nuisible qui envahit, selon les saisons et les lieux, les surfaces utilisées.

Les prédateurs sont principalement les mammifères rongeurs ou insectivores qui, pour trouver leur pitance ou leurs lieux d'hibernation ou de procréation, devront creuser des galeries et rejeter des excédents de terre sur les lieux exploités.

A ce jour, il existe des procédés permettant la destruction complète de ces prédateurs mais les moyens employés sont, d'une part, très onéreux et, d'autre part, difficiles à mettre en oeuvre.

La présente invention remédie particulièrement aux inconvénients mentionnés ci-dessus en utilisant, par une répartition suffisante dans les galeries creusées par ces prédateurs pour une surface très importante, un gaz toxique lourd, peu volatil et ce, en petite quantité donc peu agressif pour la nature. Ces surfaces sont surtout les jardins d'agrément et les potagers ainsi que les pelouses, cultures de fleurs, terrains de golf, etc... .

Les espèces à traiter sont plus particulièrement les surmulots, les rats et surtout les taupes.

Conformément à l'invention, l'appareil répartiteur de gaz toxique permettant la destruction en terre d'animaux nuisibles divers tels que surmulots, rats, taupes, qui est constitué par un coffre étanche comportant intérieurement au moins une chambre de retenue du gaz et qui peut être mise en communication au moyen d'un raccord à embout, d'une part, avec l'organe producteur de gaz toxique lourd et, d'autre part, avec des conduits de répartition de ce gaz lourd, est caractérisé en ce que chaque conduit aboutit à un injecteur répartiteur sensiblement tronconique que l'on place dans les galeries créées par les nuisibles à détruire, le coffre étanche formant réceptacle comportant, d'une part, des ouvertures d'entrée permettant l'injection de liquides toxiques complémentaires facilement volatils d'origines diverses et, d'autre part, sa chambre intérieure est divisée par une paroi semi-rigide formant cloison assurant la division en deux chambres distinctes permettant ainsi une stabilité optimale du fluide transporté.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une vue en perspective du coffre étanche muni d'un côté d'un conduit avec embout permettant le raccordement au pot d'échappement d'un moteur à combustion interne et montrant, de l'autre côté, les conduits se terminant par les répartiteurs tronconiques d'injection du gaz lourd dans le sol.

La fig. 1a montre le support du coffre étanche de la fig. 1.

La fig. 2 est une coupe longitudinale du coffre étanche.

Les fig. 3, 4 et 5 montrent en détail la constitution du coffre.

La fig. 6 est une coupe longitudinale de l'embout se fixant sur le pot d'échappement d'un moteur à combustion interne avec la pièce protégeant le joint.

La fig. 7 est une vue latérale, à grande échelle, du répartiteur injectant le gaz lourd dans le sol.

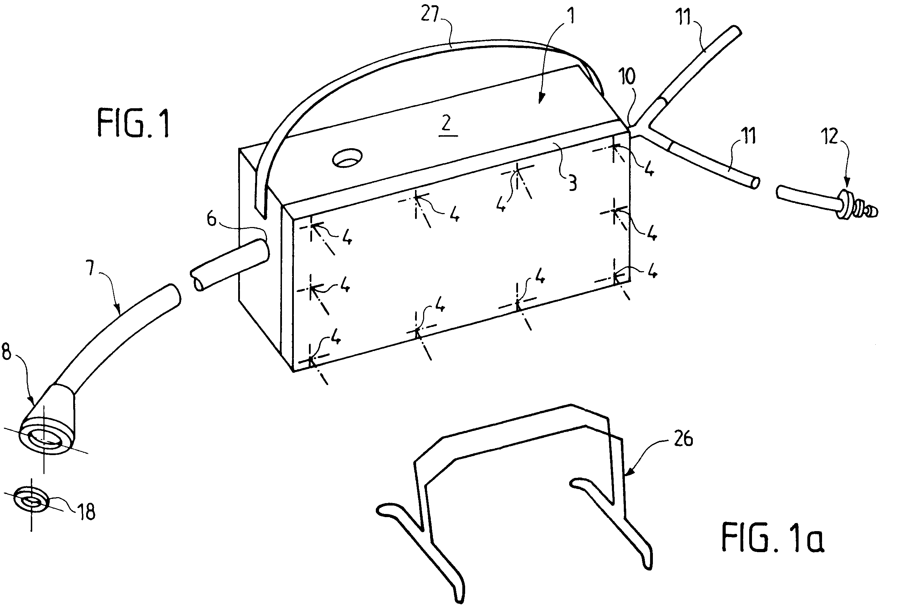

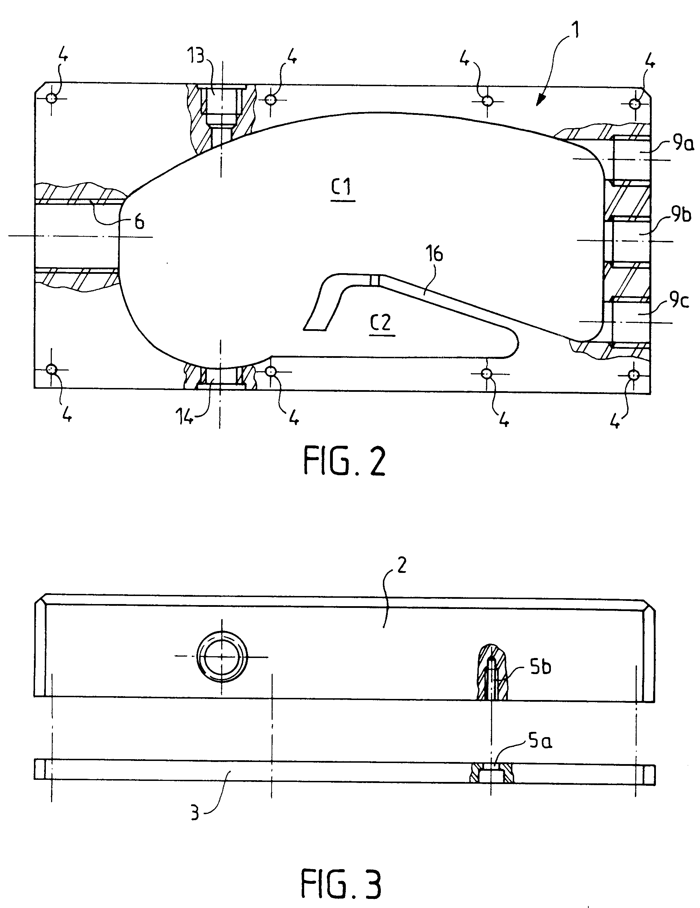

A la fig. 1, on a représenté le coffre étanche 1 de forme parallélépipédique rectangle, constitué par un corps 2 recouvert par un couvercle 3 (voir fig. 3, 4 et 5). Le couvercle 3 est fixé sur le corps 2 par des vis 4 qui se logent dans des pièces trouées 5a, 5b percées dans le couvercle 3 et dans le corps 2.

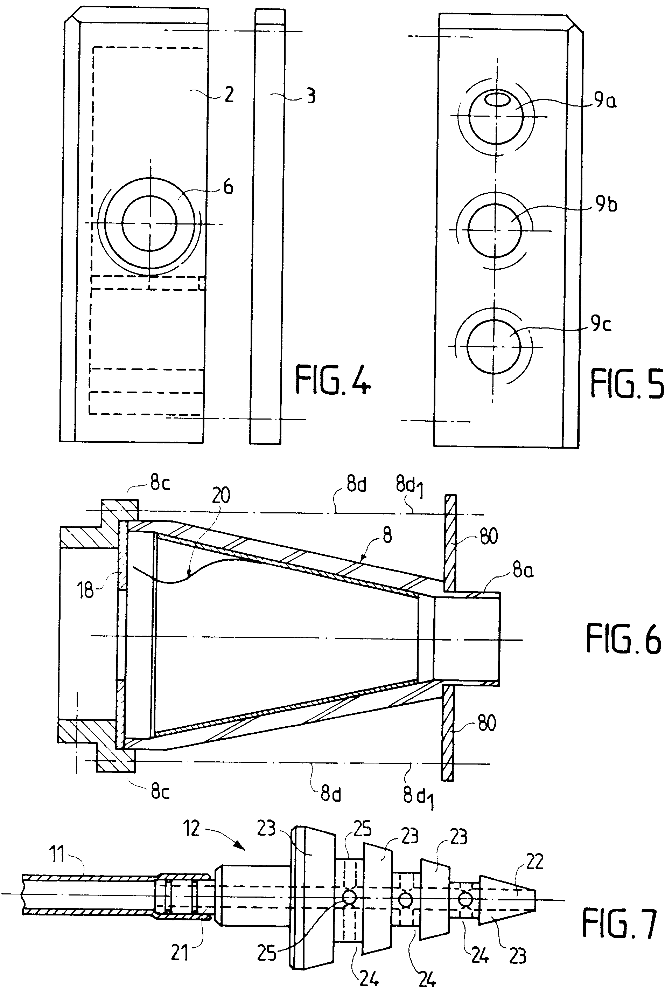

Ce dernier comporte, comme cela est visible aux fig. 1 et 4, un conduit d'entrée 6 destiné à être raccordé à un conduit souple 7 terminé par un embout 8 de forme tronconique et qui sera décrit plus loin.

Le corps opposé du coffre étanche 1 comporte trois ouvertures 9a, 9b, 9c destinées à recevoir des conduits by-pass 10 prolongés par des conduits 11 aboutissant au répartiteur tronconique 12 qui sont décrits en détail à la fig. 7.

Finalement, il est prévu dans la partie haute et dans la partie basse du coffre étanche 1 (voir fig. 2) des entrées 13, 14 normalement fermées d'une manière étanche et qui permettent l'introduction dans les chambres intérieures C1, C2 de liquides toxiques complémentaires facilement volatils à température ambiante si nécessaire.

Les chambres C1 et C2 sont délimitées par une cloison 16 légèrement souple qui permet, en collaboration avec la forme particulière des chambres C1 et C2, la bonne conservation du fluide volatil en assurant une stabilité optimale de ce fluide en cours de transport. En particulier, on atténue ainsi les phénomènes ondulateurs engendrés au cours du transport.

Comme indiqué ci-dessus, le conduit de remplissage 7 menant au conduit d'entrée 6 est muni d'un embout 8 (voir fig. 6) de forme cylindro-tronconique dont l'extrémité 8a, de grand diamètre de forme cylindrique, porte normalement une membrane 18 souple, permettant l'introduction à travers le trou 19 de cette membrane 18 de l'extrémité du pot d'échappement du moteur à combustion interne. Ce pot d'échappement est ensuite guidé à l'intérieur de l'embout 8 par trois lames de ressort 20 sensiblement en forme de S et disposées à 120° les unes des autres. Une pièce 8c fixée sur l'embout 8 par trois éléments filetés 8d (vis ou élément d'encliquetage) vient maintenir le joint membrane 18 sur l'embout 8 et permet une protection de ce joint 18. On obtient ainsi un centrage parfait dans l'embout 8 sur l'extrémité du pot d'échappement et sa fixation. Les autres extrémités 8d₁ des dispositifs 8d sont fixées sur une pièce 80 solidaire de la partie 8a de la pièce 8.

En ce qui concerne chaque répartiteur 12 (voir fig. 7) placé en bout des conduits 11, ces répartiteurs comportent une queue 21 pénétrant à l'intérieur des conduits 11. L'étanchéité entre la queue 21 et chaque conduit 11 est assurée par différents moyens tels que colliers, soudures ou collage puis le répartiteur, qui est percé sur toute sa longueur par un canal central 22, présente, de distance en distance, des anneaux tronconiques 23 de diamètre dégressif, séparés par des parties cylindriques 24 percées de trous radiaux 25 assurant ainsi la distribution du fluide gazeux lourd dans les galeries souterraines après introduction aisée du répartiteur tronconique 12 de ces galeries.

Bien entendu, il est possible de munir chaque conduit 11 d'un robinet permettant la fermeture de chaque conduit 11 après usage. De même, il est prévu un obturateur complet sur l'extrémité de l'embout 8 après remplissage des chambres C1 et C2.

Pour finir, et lors de l'utilisation de cet appareil, celui-ci est maintenu au-dessus du sol dans la position recherchée par un portique 26, le coffre 1 étant suspendu sur le portique 26 par la bride 27.

En général, le coffre 1 est réalisé en matière plastique synthétique résistant aux agents considérés ainsi que les conduits 7 et 11 tandis que l'embout 8 est le plus souvent réalisé en matière synthétique dure de même que les répartiteurs tronconiques 12 mais, dans certains cas, ces deux dernières pièces peuvent également être réalisées en métal convenant à l'utilisation envisagée.

## Revendications

**1 -** Appareil répartiteur de gaz toxique permettant la destruction en terre d'animaux nuisibles divers tels que surmulots, rats, taupes, qui est constitué par un coffre étanche (1) comportant intérieurement au moins une chambre (C1) de retenue du gaz et qui peut être mise en communication au moyen d'un raccord à embout (8), d'une part, avec l'organe producteur de gaz toxique lourd et, d'autre part, avec des conduits de répartition de ce gaz lourd, caractérisé en ce que chaque conduit aboutit à un injecteur répartiteur (12) sensiblement tronconique que l'on place dans les galeries créées par les nuisibles à détruire, le coffret (1) formant réceptacle comportant, d'une part, des ouvertures d'entrée (13, 14) permettant l'injection de liquides toxiques complémentaires facilement volatils d'origines diverses et, d'autre part, sa chambre du réceptacle est divisée par une paroi semi-rigide formant cloison assurant la division en deux chambres (C1, C2) distinctes permettant ainsi une stabilité optimale du fluide transporté.

**2 -** Appareil suivant la revendication 1, caractérisé en ce qu'il est prévu, lors de l'utilisation des gaz d'échappement de moteurs à combustion interne, un conduit souple (7) aboutissant à un raccord creux tronconique formant un embout (8) en partie fermée à son extrémité libre par une membrane souple (18) permettant l'introduction de l'embout tronconique (8) sur le pot d'échappement, la position de cet embout étant déterminée par trois lames-ressorts (20) conformées, placées à l'intérieur de l'embout et disposées à 120° les unes des autres, puis des pièces (8c et 80) complètent ce dispositif de maintien du joint membrane (18) par trois éléments placés à 120° les unes des autres.

**3 -** Appareil suivant l'une des revendications 1 à 2, caractérisé en ce que chaque répartiteur (12) comporte une queue (21) de raccordement à un conduit (11), puis le répartiteur est percé sur toute sa longueur d'un canal central (22) présentant, de distance en distance, des anneaux tronconiques (23) de diamètre dégressif séparés par des parties cylindriques (24) percées de trous radiaux (25) de distribution du fluide gazeux toxique lourd.

**4 -** Appareil répartiteur de gaz toxique permettant la destruction en terre d'animaux nuisibles divers sensiblement tel que décrit et représenté aux dessins annexés.
